# EUROPEAN PATENT SPECIFICATION

(11) **EP 4 206 133 B1**
(45) Date of publication and mention of the grant of the patent: **28.01.2026**
(21) Application number: 21860885.9
(22) Date of filing: 24.05.2021
(51) Int. Cl.: C01B 33/32, H01M 4/36, H01M 4/38, C04B 35/634, C04B 35/645, H01M 4/13, H01M 4/133, H01M 4/134, H01M 4/48, H01M 4/58, H01M 4/587, H01M 4/62, H01M 10/052, H01M 4/485, H01M 10/0525, H01M 4/02

(54) **NEGATIVE ELECTRODE MATERIAL FOR NON-AQUEOUS ELECTROLYTE SECONDARY BATTERY, AND NON-AQUEOUS ELECTROLYTE SECONDARY BATTERY**
NEGATIVELEKTRODENMATERIAL FÜR EINE SEKUNDÄRBATTERIE MIT WASSERFREIEM ELEKTROLYT UND SEKUNDÄRBATTERIE MIT WASSERFREIEM ELEKTROLYT
MATÉRIAU D'ÉLECTRODE NÉGATIVE POUR BATTERIE SECONDAIRE À ÉLECTROLYTE NON AQUEUX ET BATTERIE SECONDAIRE À ÉLECTROLYTE NON AQUEUX

(30) Priority: 27.08.2020 JP 2020143870
(43) Date of publication of application: 05.07.2023
(73) Proprietor: Panasonic Intellectual Property Management Co., Ltd., Kadoma-shi, Osaka 571-0057 (JP)
(72) Inventor: SATO, Yosuke, Kadoma-shi, Osaka 571-0057 (JP); SAITO, Yusuke, Kadoma-shi, Osaka 571-0057 (JP); SEKI, Naoki, Kadoma-shi, Osaka 571-0057 (JP)
(74) Representative: Novagraaf International SA
(86) International application number: PCT/JP2021/019502
(87) International publication number: WO 2022/044454

(56) References cited:
- WO-A1-2016/136180
- WO-A1-2019/065195
- CN-A- 108 134 087
- JP-A- 2001 006 661
- JP-A- 2009 016 245
- JP-A- 2012 094 460
- US-A1- 2020 176 818
- DATABASE WPI Week 201234, Derwent World Patents Index; AN 2012-F66816, XP002812040
- DATABASE WPI Week 201957, Derwent World Patents Index; AN 2019-58573K, XP002812041
- RINAT J. ET AL: "Electrocrystallization of calcium carbonate on carbon-based electrodes", JOURNAL OF ELECTROANALYTICAL CHEMISTRY, vol. 575, no. 2, 1 February 2005 (2005-02-01), AMSTERDAM, NL, pages 195 - 202, XP093195808, ISSN: 1572-6657, DOI: 10.1016/j.jelechem.2004.09.011

## Description

### [Technical Field]

The present disclosure mainly relates to an improvement of a negative electrode for a non-aqueous electrolyte secondary battery.

### [Background Art]

Non-aqueous electrolyte secondary batteries, particularly lithium ion secondary batteries, because of their high voltage and high energy density, have been expected as promising power sources for small consumer applications, power storage devices, and electric cars. With increasing demand for a higher battery energy density, a material containing silicon (Si) that forms an alloy with lithium has been expected to be utilized as a negative electrode active material having a high theoretical capacity density.

Patent Literature 1 proposes a negative electrode active material including a lithium silicate phase represented by Li_{2z}SiO_{2+z} where 0 < z < 2, and silicon particles dispersed in the lithium silicate phase.

Patent Literature 2 proposes composite core-shell particles. The core is a porous, carbon-based matrix containing silicon particles. The silicon particles are enclosed in the pores of the matrix, and the pores containing the silicon particles have a diameter of ≥ 60 nm. The shell can be obtained by carbonizing one or more carbon precursors selected from the group consisting of a tar, a pitch, a hard carbon, a soft carbon, and a hydrocarbon having 1 to 20 carbon atoms, resulting in a non-porous shell. The pores containing the silicon particles can be obtained by coating the silicon particles with one or more sacrificial materials first, then coating the resulting products with the one or more of carbon precursors, and later, removing the sacrificial material-based coating so that the carbon precursor-based coating is converted into a carbon-based matrix before or during the removal of the sacrificial materials.

Patent Literature 3 proposes composite particles each having a base material and a coating layer covering the base material. The coating layer is composed of a plurality of coated particles, and the coated particles has a stress relaxation rate of 5.0% or more. As the method of adjusting the stress relaxation rate of the coated particles, the literature mentions a method of chemically or physically treating the surface of the coated particles, a method of adding an additive, and the like. By using a lubricant as the additive, for example, metal soaps, such as a higher fatty acid like stearic acid, magnesium stearate, calcium stearate, aluminum stearate, zinc stearate, and calcium montanate, and organic compound waxes, such as paraffin wax, the friction between the particles can be reduced, and the stress relaxation rate can be reduced.

Patent Literature 4 and 6 disclose a negative electrode material containing a lithium silicate phase and silicon particles dispersed in the lithium silicate phase. Patent Literature 5 discloses a non-aqueous lithium ion secondary battery wherein the positive electrode has a lithium oxide containing manganese as a positive electrode active material. Non-Patent Literature 1 discloses a study of electrocrystallization of calcium carbonate on carbon-based electrodes.

### [Citation List]

### [Patent Literature]

Patent Literature 1: International Publication WO2016/35290
Patent Literature 2: Japanese Laid-Open Patent Publication No. 2018-524246
Patent Literature 3: Japanese Laid-Open Patent Publication No. 2014-197503
Patent Literature 4: U.S. Patent Application Publication No. 2020/176818 A1
Patent Literature 5: Japanese Patent Application Publication No. JP 2012-094460 A
Patent Literature 6: International Publication WO 2019/130787 A1

### [Non-Patent Literature]

Non-Patent Literature 1: Rinat et al., Journal of Electroanalytical Chemistry, vol. 575, n°2, pp. 195-202, 2005

### [Summary of Invention]

Among Patent Literatures 1 to 3, the negative electrode active material of Patent Literature 1 including a lithium silicate phase and silicon particles dispersed therein is promising. However, lithium silicate is apt to dissolve in a decomposition product (e.g., HF) generated by the side reaction of a non-aqueous electrolyte component. When lithium silicate dissolves, the surface area of the lithium silicate phase increases, and the progress of the side reaction is facilitated. As a result, the deterioration in capacity due to repeated charge-discharge cycles of the non-aqueous electrolyte secondary battery becomes severe.

The invention is as set out in the independent claims, further aspects of the invention are outlined in the dependent claims. Embodiments that do not fall within the scope of the claims do not describe part of the invention.

In view of the above, one aspect of the present disclosure relates to a negative electrode material for a non-aqueous electrolyte secondary battery, including: composite particles; and a conductive layer disposed on a surface of each of the composite particles, wherein the composite particles each have a silicate phase, and silicon phases dispersed in the silicate phase, and the conductive layer contains a calcium component. According to the claimed invention, the silicate phase contains L₁₂Si₂O₅, the calcium component has an average particle diameter of 200 nm or less, and the calcium component includes at least one selected from the group consisting of calcium carbonate and calcium oxide.

Another aspect of the present disclosure relates to a non-aqueous electrolyte secondary battery, including: a positive electrode; a negative electrode; and a non-aqueous electrolyte, wherein the negative electrode includes the above-described negative electrode material.

According to the present disclosure, the deterioration in capacity due to repeated charge-discharge cycles of the non-aqueous electrolyte secondary battery can be suppressed. Hereinafter, such deterioration in capacity is sometimes referred to as the "reduction in charge-discharge cycle characteristics."

### [Brief Description of Drawings]

[FIG. 1] A schematic cross-sectional view of a composite particle having a Ca-containing conductive layer according to one embodiment of the present disclosure.
[FIG. 2] A schematic cross-sectional view of the composite particle having a Ca-containing conductive layer after subjected to charge and discharge several times.
[FIG. 3] A partially cut-away schematic oblique view of a non-aqueous electrolyte secondary battery according to one embodiment of the present disclosure.
[FIG. 4A] A cross-sectional TEM photograph of a composite particle having a Ca-containing conductive layer according to one embodiment of the present disclosure.
[FIG. 4B] A spectrum obtained when a region 1 in the Ca-containing conductive layer and a region 2 in the composite particle of FIG. 4A were analyzed by electron energy loss spectroscopy (TEM-EELS).

### [Description of Embodiments]

### [Negative electrode material for non-aqueous electrolyte secondary battery]

A negative electrode material for a non-aqueous electrolyte secondary battery according to an embodiment of the present disclosure includes composite particles, and a conductive layer disposed on a surface of each of the composite particles. The composite particles each have a silicate phase, and silicon phases dispersed in the silicate phase. The conductive layer contains a calcium (Ca) component. Hereinafter, the conductive layer containing a Ca component is sometimes referred to as a "Ca-containing conductive layer." A negative electrode material which includes composite particles and a conductive layer disposed on the surface thereof and in which the conductive layer contains a Ca component is sometimes referred to as "composite particles having a Ca-containing conductive layer."

The silicon phases repeatedly expand and contract as the charge and discharge of the non-aqueous electrolyte secondary battery proceed. The silicon phases, however, are dispersed within the silicate phase. The composite particles therefore have excellent structural stability. In addition, the silicate phase, as compared to silica (SiO₂), has few reaction sites with lithium ions, and the irreversible capacity thereof is small.

The Ca-containing conducting layer is provided at the surface of the composite particles. This increases the chances that the decomposition product, such as HF, generated by the side reaction of a non-aqueous electrolyte component (hereinafter, the electrolyte decomposition product) comes in contact with the Ca-containing conductive layer than the silicate phase. Furthermore, the Ca component in the Ca-containing conductive layer has high reactivity with the electrolyte decomposition product, and incorporates the electrolyte decomposition product into the Ca-containing conductive layer and reacts therewith. As a result, the electrolyte decomposition product is converted into a stable substance, such as CaF₂. The electrolyte decomposition product is thus incorporated into the Ca-containing conducting layer and stabilized, and this significantly decreases the chances of the electrolyte decomposition product and the silicate phase coming in contact with each other. Therefore, the increase of the surface area of the lithium silicate phase due to dissolution of lithium silicate is suppressed, and the reduction in charge-discharge cycle characteristics due to the progress of the side reaction is suppressed.

Here, the state in which the Ca-containing conducting layer is provided at the surface of the composite particles includes a state in which the Ca-containing conductive layer is attached or deposited on at least part of the surface of each of the composite particles, or a state in which the Ca-containing conductive layer covers like a film at least part of the surface of each of the composite particles.

The average particle diameter of the composite particles is, for example, 1 µm or more and 25 µm or less, and may be 4 µm or more and 15 µm or less. In the above particle diameter range, the stress caused by the volume change of the composite particles associated with charge and discharge tends to be relaxed, and favorable cycle characteristics tend to be obtained. The surface area of the composite particles also can be an appropriate size, and the reduction in capacity due to the side reaction with the non-aqueous electrolyte is also suppressed. The average particle diameter of the composite particles means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used. The Ca-containing conductive layer does not substantially influence the average particle diameter of the composite particles. Therefore, the average particle diameter of the composite particles may be regarded as substantially equal to the average particle diameter of the composite particles having a Ca-containing conductive layer.

The composite particles can be taken out from the battery in the following manner. First, the battery in a fully discharged state is disassembled, to take out the negative electrode, and the negative electrode is washed with anhydrous ethyl methyl carbonate or dimethyl carbonate, to remove the non-aqueous electrolyte component. As described later, the negative electrode has a negative electrode current collector and a negative electrode mixture layer supported on its surface. The negative electrode mixture layer is peeled off from the copper foil, and ground in a mortar, to obtain a sample powder. Next, the sample powder is dried in a dry atmosphere for 1 hour, and immersed in a weakly boiled 6M hydrochloric acid for 10 minutes, to remove elements derived from components other than the composite particles. Next, the sample powder is washed with ion-exchanged water, and filtered, followed by drying at 200 °C for 1 hour. This is followed by heating to 900 °C in an oxygen atmosphere to remove the Ca-containing conductive layer, and thus, the composite particles only can be isolated. The fully discharged state means a state in which the depth of discharge (DOD) is 90% or more (the state of charge (SOC) is 10% or less).

### <Silicate phase>

The silicate phase is constituted of a compound containing a metal element, silicon (Si), and oxygen (O). The metal element is not limited, but when including at least lithium, for example, the entry and exit of lithium ions into and from the silicate phase is facilitated. In other words, the silicate phase preferably includes at least a lithium silicate.

The lithium silicate is a silicate containing lithium (Li), silicon (Si), and oxygen (O). The atomic ratio O/Si of O to Si in the lithium silicate is, for example, greater than 2 and less than 4. When the O/Si ratio is greater than 2 and less than 4 (z in the below-described formula satisfies 0 < z < 2), it is advantageous in the stability and the lithium ion conductivity of the silicate phase. The O/Si ratio is preferably greater than 2 and less than 3. The atomic ratio Li/Si of Li to Si in the lithium silicate is, for example, greater than 0 and less than 4.

The composition of the lithium silicate can be represented by a formula: Li_{2z}SiO_{2+z} where 0 < z < 2. In view of the stability, the ease of production, and the lithium ion conductivity, z preferably satisfies 0 < z < 1, and z = 1/2 is more preferred. A lithium silicate that satisfies z = 1/2 can be represented by Li₂Si₂O₅. The lithium silicate desirably includes Li₂Si₂O₅ as a major component, and desirably, Li₂Si₂O₅ is a major component of the whole silicate phase. Herein, the "major component" refers to a component that occupies 50% or more of the mass of the whole lithium silicate or the whole silicate phase, and may occupy 70% or more.

The silicate phase can further contain, in addition to Li, Si, and O, an element M different therefrom. When the silicate phase contains the element M, the chemical stability and the lithium ion conductivity of the silicate phase are improved, or the side reaction due to contact between the silicate phase and the non-aqueous electrolyte is suppressed.

The element M may be at least one selected from the group consisting of, for example, sodium (Na), potassium (K), magnesium (Mg), barium (Ba), zirconium (Zr), niobium (Nb), tantalum (Ta), vanadium (V), titanium (Ti), phosphorus (P), bismuth (Bi), zinc (Zn), tin (Sn), lead (Pb), antimony (Sb), cobalt (Co), fluorine (F), tungsten (W), aluminum (Al), boron (B), and a rare earth element. In view of the chemical resistance to non-aqueous electrolyte and the structural stability of the silicate phase, the element M preferably includes at least one selected from the group consisting of Zr, Ti, P, Al, and B.

The rare earth element can improve the charge-discharge efficiency in the early stage of charge-discharge cycles. The rare earth element may be any one selected from scandium (Sc), yttrium (Y), and a lanthanide element. The rare earth element preferably includes at least one selected from the group consisting of lanthanum (La), cerium (Ce), praseodymium (Pr), and neodymium (Nd). In view of improving the lithium ion conductivity, in particular, the rare earth element more preferably includes La. The ratio of La to the total rare earth elements is preferably 90 atom% or more and 100 atom% or less.

The silicate phase may further contain a very small amount of iron (Fe), chromium (Cr), nickel (Ni), manganese (Mn), copper (Cu), molybdenum (Mo), or other elements.

The element M may be forming a compound. The compound may be, for example, a silicate of the element M, or an oxide of the element M, depending on the kind of the element M.

In the silicate phase, the content of the element M is, for example, 1 mol% or more and 40 mol% or less to the total amount of the elements other than oxygen.

The contents of Li, Si, and the element M in the silicate phase can be measured, for example, by analyzing a cross section of the negative electrode mixture layer.

First, the battery in a fully discharged state is disassembled, to take out the negative electrode, and the negative electrode is washed with anhydrous ethyl methyl carbonate or dimethyl carbonate, to remove the non-aqueous electrolyte component, and dried. This is followed by processing with a cross section polisher (CP) to obtain a cross section of the negative electrode mixture layer. Next, a field emission scanning electron microscope (FE-SEM) is used to observe the cross section of the negative electrode mixture layer.

The content of each element can be then determined by any of the following methods. From the content of each element, the composition of the silicate phase can be calculated.

### <EDX>

From a cross-sectional backscattered electron image of the negative electrode mixture layer, 10 composite particles having a maximum diameter of 5 µm or more are randomly selected, to perform an elemental mapping analysis by energy dispersive X-ray (EDX) on each particle. The area occupied by the target element is calculated using an image analysis software. The observation magnification is desirably 2000 to 20,000 times. The measured values of the area occupied by the predetermined element contained in the 10 particles are averaged. From the obtained average value, the content of the target element can be calculated.

Desirable cross-sectional SEM-EDX analysis measurement conditions are shown below.

### <SEM-EDX measurement conditions>

Processing apparatus: SM-09010 (Cross Section Polisher) available from JEOL
Processing conditions: accelerating voltage 6 kV
Current value: 140 µA
Degree of vacuum: 1·10⁻³ to 2·10⁻³ Pa
Measuring apparatus: Electron microscope SU-70 available from HITACHI
Acceleration voltage during analysis: 10 kV
Field: Free mode
Probe current mode: Medium
Probe current range: High
Anode Ap.: 3
OBJ Ap.: 2
Analysis area: 1 µm square
Analysis software: EDAX Genesis
CPS: 20,500
Lsec: 50
Time constant: 3.2

### <AES>

From a cross-sectional backscattered electron image of the negative electrode mixture layer, 10 composite particles having a maximum diameter of 5 µm or more are randomly selected, to perform a qualitative/quantitative analysis on each particle using an Auger electron spectroscopy (AES) analyzer (JAMP-9510F, available from JEOL Corporation). The measurement conditions may be set such that, for example, the acceleration voltage is 10 kV, the beam current is 10 nA, and the analysis region is 20 µmφ. The contents of a predetermined element contained in the 10 particles are averaged, to determine its content.

The EDX and AES analyses are performed within 1 µm or more inward from the peripheral edge of the cross section of the composite particle.

### <ICP>

A sample of the composite particles is completely dissolved in a heated acid solution (a mixed acid of hydrofluoric acid, nitric acid, and sulfuric acid), and the residue of dissolution, carbon, is removed by filtration. Then, the obtained filtrate is analyzed by inductively coupled plasma emission spectroscopy (ICP), to measure a spectral intensity of each element. Subsequently, using a commercially available standard solution of the element, a calibration curve is drawn, from which the content of each element in the composite particles is calculated.

The quantification of each element can be done by other techniques, such as electron microanalyzer (EPMA), laser ablation ICP mass analysis (LA-ICP-MS), and X-ray photoelectron spectroscopy (XPS).

The contents of B, Na, K, and Al in the composite particles can be quantitatively analyzed in accordance with JIS R3105 (1995) (method for analyzing borosilicate glass).

The ratio of the Ca amount in the Ca-containing conductive layer to the mass of the composite particles may be quantitatively analyzed in accordance with JIS R3101 (1995) (method for analyzing soda-lime glass), using the composite particles having a Ca-containing conductive layer.

The carbon content in the composite particles may be measured using a carbon/sulfur analyzer (e.g., EMIA-520 available from HORIBA, Ltd.). A sample is weighed out on a magnetic board, to which an auxiliary agent is added. The sample is inserted into a combustion furnace (carrier gas: oxygen) heated to 1350 °C. The amount of carbon dioxide gas generated during combustion is detected by infrared absorption spectroscopy. A calibration curve is obtained using carbon steel (carbon content: 0.49%) available from Bureau of Analysed Samples. Ltd., from which a carbon content in the sample is determined (a high-frequency induction heating furnace combustion and infrared absorption method).

The oxygen content may be measured using an oxygen/nitrogen/hydrogen analyzer (e.g., EGMA-830, available from HORIBA, Ltd.). A sample is placed in a Ni capsule, which is put together with Sn pellets and Ni pellets serving as a flux, into a carbon crucible heated at a power of 5.75 kW, to detect a released carbon monoxide gas. From a calibration curve obtained using a standard sample Y2O3, an oxygen content in the sample is determined (an inert gas melting and non-dispersive infrared absorption method).

In the composite particles, a silicate phase and silicon phases are present. The Si content obtained by the above method is the sum of the amount of Si constituting the silicon phase and the amount of Si in the silicate phase. On the other hand, the amount of Si constituting the silicon phases can be separately determined by Si-NMR. Therefore, by using Si-NMR, the amount of Si constituting the silicon phases and the amount of Si in the silicate phase can be distinguished and determined. For a standard material necessary for quantification, a mixture containing a silicate phase whose Si content is already-known and silicon phases in a predetermined ratio is used.

Desirable Si-NMR measurement conditions are shown below.

### <Si-NMR measurement conditions>

Measuring apparatus: Solid nuclear magnetic resonance spectrometer (INOVA-400), available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec to 3000 sec
Observation width: 100 kHz
Observation center: around -100 ppm
Signal capture time: 0.05 sec
Accumulated number of times: 560
Sample amount: 207.6 mg

### <Silicon phases>

The silicon phases are each a phase of elementary silicon (Si), and repeatedly absorb and release lithium ions thereinto and therefrom during charge and discharge of the battery. The capacity develops through the Faradaic reaction in which the silicon phases are involved. The silicon phases, due to their large capacity, undergo a great degree of expansion and contraction during charge and discharge. However, the silicon phases are dispersed in the silicate phase. Therefore, the stress due to the expansion and contraction of the silicon phases is relaxed.

The silicon phases can be each constituted of a plurality of crystallites. The crystallite size of the silicon phases is preferably 30 nm or less. When the crystallite size of the silicon phases is 30 nm or less, the change in volume of the silicon phases associated with expansion and contraction during charge and discharge can be reduced, and the cycle characteristics can be further improved. For example, the isolation of a silicon phase, which occurs due to the contraction of the silicon phase as voids are formed around the silicon phase, can be suppressed, and the reduction in the charge-discharge efficiency can be suppressed. The lower limit of the crystallite size of the silicon phases is not limited, but is, for example, 1 nm or more. The crystallite size of the silicon phases is more preferably 10 nm or more and 30 nm or less, and still more preferably 15 nm or more and 25 nm or less. When the crystallite size of the silicon phases is 10 nm or more, the surface area of the silicon phases can be suppressed small, and the deterioration of the silicon phases accompanied by the generation of irreversible capacity is unlikely to occur. When the crystallite size of the silicon phases is 30 nm or less, the expansion and contraction of the silicon phases can be easily made uniform, the stress generated in the composite particles can be easily relaxed, and the cycle characteristics can be improved. The crystallite size of the silicon phases is calculated from the Scherrer formula, using a half-width of a diffraction peak attributed to the (111) plane of the silicon phase (elementary Si) in an X-ray diffraction pattern.

The silicon phases of the composite particles in the battery before the first charge are, for example, particulate. The average particle diameter of the particulate silicon phases is preferably 500 nm or less, more preferably 200 nm or less, furthermore preferably 50 nm or less. After the first charge, the average particle diameter of the silicon phases is preferably 400 nm or less, more preferably 100 nm or less. By using finer silicon phases, the changes in volume of the composite particles during charge and discharge are reduced, and the structural stability of the composite particles can be further improved. The average particle diameter of the silicon phases is measured by observing a cross-sectional SEM image of a composite particle. Specifically, the average particle diameter of the silicon phases is obtained by averaging the maximum diameter of 100 randomly-selected silicon phases.

In view of achieving a higher capacity, the content of the silicon phases in the composite particles is preferably 30 mass% or more, more preferably 35 mass% or more, further more preferably 55 mass% or more. In this case, the diffusibility of lithium ions is favorable, and excellent load characteristics can be obtained. On the other hand, in view of improving the cycle characteristics, the content of the silicon phases in the composite particles is preferably 95 mass% or less, more preferably 75 mass% or less, further more preferably 70 mass% or less. In this case, the exposed surface area of the silicon phases without being covered with the silicate phase decreases, and the reaction between the non-aqueous electrolyte and the silicon phases tends to be suppressed.

### <Ca-containing conductive layer>

The Ca-containing conductive layer is provided at the surface of the composite particles. The Ca-containing conductive layer imparts electrical conductivity to the composite particles. That is, the Ca-containing conductive layer forms part of the conductive network within the negative electrode. While the silicate phase does not have electrical conductivity, the composite particles with the conductive layer have electrical conductivity, and thus, the current collecting performance of the negative electrode is improved.

The Ca-containing conductive layer covers at least part of the surface of the composite particles. Therefore, the Ca-containing conductive layer also acts as a barrier layer that suppresses the side reaction between the non-aqueous electrolyte and the composite particles and between the electrolyte decomposition product and the composite particles. In particular, the electrolyte decomposition product (esp. HF) tends to cause a deterioration of the silicate phase. In contrast, the calcium component contained in the Ca-containing conductive layer more preferentially reacts with the electrolyte decomposition product than the silicate phase, and thus, the deterioration of the silicate phase is significantly suppressed.

The Ca-containing conductive layer, in view of securing the capacity, is preferably thin enough not to substantially influence the average diameter of the composite particles. The thickness of the Ca-containing conductive layer is preferably 1 nm or more and 200 nm or less, more preferably 5 nm or more and 100 nm or less, for securing the electrical conductivity and allowing for diffusion of lithium ions. The thickness of the conductive layer can be measured by cross-section observation of the composite particles using a SEM or TEM. Specifically, the thicknesses of the Ca-containing conductive layer of 10 randomly-selected composite particles having the conductive layer are averaged. Note that that the thickness of the Ca-containing conductive layer is determined by averaging the thicknesses measured at any 10 points, for each composite particle.

The proportion by mass of the Ca-containing conductive layer to the total of the composite particles and the Ca-containing conductive layer may be 0.5 mass% or more and 10 mass% or less, and may be 1 mass% or more and 5 mass% or less.

The Ca-containing conductive layer includes an electrically conductive material and a Ca component dispersing in the conductive material. The conductive material is preferably a carbonaceous material. Examples of the carbonaceous material include an amorphous carbon, graphite, graphitizable carbon (soft carbon), and non-graphitizable carbon (hard carbon). **In** particular, an amorphous carbon is preferred in that a thin conductive layer covering the surface of the composite particles can be easily formed. Examples of the amorphous carbon includes carbon black, calcined pitch, coke, and activated carbon. Examples of the graphite includes natural graphite, artificial graphite, and graphitized mesophase carbon.

The Ca component having a higher reactivity with the electrolyte decomposition product is more desirable. From such a point of view, in embodiments not forming part of the claimed invention, for example, calcium carbide (CaC₂), calcium hydroxide (Ca(OH)₂), and the like are desirable. According to the claimed invention, the calcium component includes at least one selected from the group consisting of calcium carbonate and calcium oxide. One of them may be contained singly in the Ca-containing conductive layer, or two or more of them may be contained in any combination in the Ca-containing conductive layer.

The Ca component contained in the Ca-containing conductive layer, even in a very small amount, reacts with the electrolyte decomposition product and exerts an effect of suppressing the deterioration of the silicate phase. Therefore, Ca may be contained in the Ca-containing conductive layer in any amount that does not significantly impair the function as the conductive layer. It suffices as long as the Ca component is detected from the Ca-containing conductive layer. The Ca amount in the Ca-containing conductive layer may be, for example, 0.01% or more and 0.5% or less, may be 0.01% or more and 0.3% or less, and may be 0.02% or more and 0.1% or less, relative to the mass of the composite particles.

The particle diameter of the Ca component (e.g., CaCO₃, CaO) contained in the Ca-containing conductive layer is desirably such a particle diameter that allows for uniform dispersion in the Ca-containing conductive layer, and is preferably restricted to be equal to or smaller than the thickness of the conductive material constituting the conductive layer. Specifically, the average particle diameter of the Ca component is 200 nm or less, more preferably 100 nm or less. The average particle diameter of the Ca component is measured using a cross-sectional image of the composite particle obtained using a SEM or TEM. Specifically, the average particle diameter of the Ca component is obtained by averaging the maximum diameters of 10 randomly-selected particles of the Ca component.

The presence of the Ca component (e.g., CaCO₃, CaO) in the Ca-containing conductive layer can be confirmed by, for example, analyzing a cross section of the composite particles having a Ca-containing conductive layer by electron energy loss spectroscopy (TEM-EELS). When the Ca-containing conductive layer contains, for example, CaCO₃, the TEM-EELS loss spectrum has a peak derived from CaCO₃ at or near 349 eV and at or near 352 eV. Likewise, when the Ca-containing conductive layer contains, for example, CaO, the TEM-EELS loss spectrum has a peak derived from CaO. On the other hand, when the analysis of the interior of the composite particle finds that the TEM-EELS loss spectrum does not have a peak derived from CaCO₃ or CaO, it can be seen that the Ca component is selectively contained in the Ca-containing conductive layer.

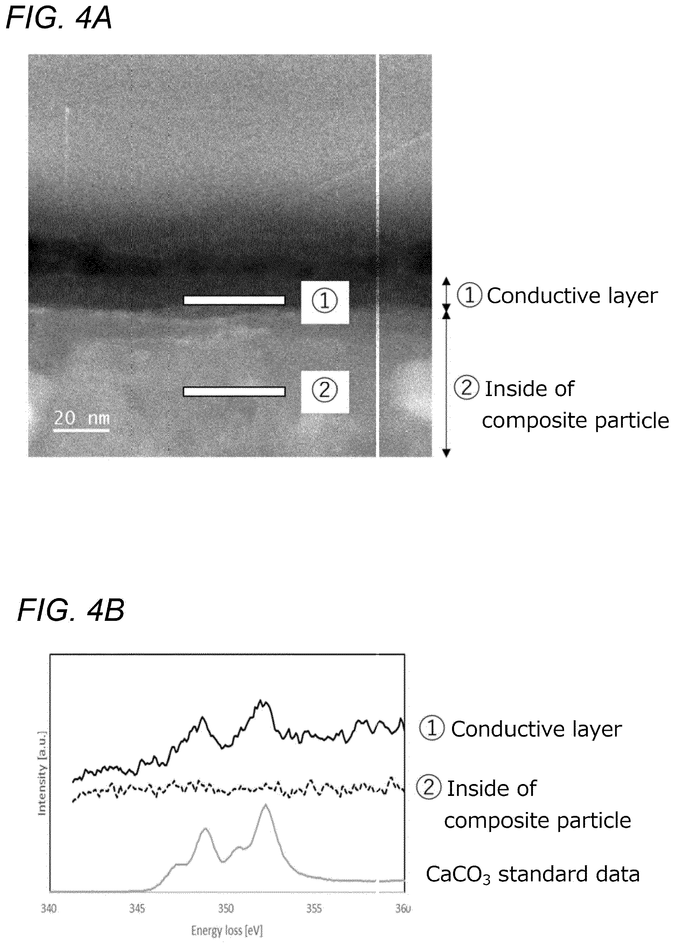

FIG. 4A is a cross-sectional TEM photograph of a composite particle having a Ca-containing conductive layer according to the later-described Example 1, showing a cross section near the interface between the Ca-containing conductive layer and the composite particle. FIG. 4B is a spectrum obtained when a region 1 in the Ca-containing conductive layer and a region 2 in the composite particle of FIG. 4A were analyzed by TEM-EELS. The spectrum of the region 1, like the CaCO₃ standard data, has a peak derived from CaCO₃ at or near 349 eV and at or near 352 eV. Therefore, it can be confirmed that CaCO₃ is present as the Ca component in the Ca-containing conductive layer. In the spectrum of the region 2, a peak derived from CaCO₃ is not observed, neither at or near 349 eV nor at or near 352 eV.

### [Method for producing composite particles having conductive layer]

The composite particles having a conductive layer is obtained by forming a Ca-containing conductive layer on the composite particles. The composite particles are produced by, for example, by a production method including the following first to fourth steps.
(First step) A step of obtaining a raw material silicate.
(Second step) A step of, after the first step, forming the raw material silicate and a raw material silicon into a composite, to allow silicon phases to be dispersed in a silicate phase, and thus obtain a composite intermediate.
(Third step) A step of heat-treating the composite intermediate, to obtain a sintered body containing a silicate phase and silicon phases dispersed in the silicate phase.
(Fourth step) A step of pulverizing the sintered body, to obtain composite particles containing a silicate phase and silicon phases dispersed in the silicate phase.

### [First step]

The first step includes: for example, a step 1a of mixing silicon dioxide, a lithium compound, and, as needed, a compound containing an element M, to obtain a mixture; and a step 1b of baking the mixture, to obtain a raw material silicate. The baking in the step 1b is performed, for example, in an oxidizing atmosphere. The baking temperature in the step 1b is preferably 400 °C or higher and 1200 °C or lower, more preferably 800 °C or higher and 1100 °C or lower.

As the lithium compound, lithium carbonate, lithium oxide, lithium hydroxide, lithium hydride, and the like can be used. The lithium compound may be used singly or in combination of two or more kinds.

As the compound containing an element M, an oxide, hydroxide, hydride, halide, carbonate, oxalate, nitrate, sulfate, and the like of the element M can be used. The compound containing an element M may be used singly or in combination of two or more kinds.

### [Second step]

The second step has, for example, a step of pulverizing a mixture of the lithium silicate and a raw material silicon while applying a shearing force to the mixture, to obtain a fine-grained a composite intermediate. Here, for example, the raw material silicate and a raw material silicon are mixed in a predetermined mass ratio, and the mixture is pulverized into fine particles while being stirred, using a pulverizer like a ball mill.

As the raw material silicon, coarse-grained silicon particles of about several µm to several tens of µm in average particle diameter can be used. The finally obtained silicon particles are preferably controlled such that the crystallite size calculated by using the Scherrer formula from the half width of a diffraction peak belonging to the Si (111) plane in an X-ray diffraction pattern is 10 nm or more.

The second step is not limited to the above. For example, without using a pulverizer, silicon nanoparticles and nanoparticles of raw material silicate may be synthesized, and mixed together.

### [Third step]

The third step has, for example, a step of baking the composite intermediate formed into fine particle, while applying a pressure to the composite intermediate using a hot press or the like, to obtain a sintered body. The baking of the composite intermediate is performed, for example, in an inert atmosphere (e.g., an atmosphere of argon, nitrogen, etc.). The baking temperature is preferably 450 °C or higher and 1000 °C or lower. Within the above temperature range, fine silicon particles can be easily dispersed in the silicate phase with low crystallinity. The raw material silicate is stable in the above temperature range and hardly reacts with silicon. The baking temperature is preferably 550 °C or higher and 900 °C or lower, more preferably 650 °C or higher and 850 °C or lower. The baking time is, for example, 1 hour or more and 10 hours or less.

### [Fourth step]

The fourth step is a step of pulverizing the sintered body to have a desired particle size distribution, to obtain composite particles containing a silicate phase and silicon phases dispersed in the silicate phase. The composite particles are pulverized to be, for example, an average particle diameter of 1 to 25 µm.

### [Step of forming Ca-containing conductive layer]

Next, an example of a step of forming a Ca-containing conductive layer on the composite particles will be described. As a raw material of a conductive material for forming the conductive layer, for example, coal or coal tar pitch, petroleum pitch, phenol resin, and the like can be used. By mixing the raw material of a conductive material and the composite particles, and baking the mixture to carbonize the raw material of a conductive material, a conductive layer covering at least part of the surface of the composite particles is formed.

Here, when a raw material of a Ca component is contained in the raw material of a conductive material, a Ca-containing conductive layer is formed. The raw material of a Ca component is desirably an organic substance containing Ca. The organic substance containing Ca has high affinity with the raw material of a conductive material, and can easily dissolve or disperse uniformly into the raw material of a conductive material. Among the organic substances containing Ca, fatty acid calcium is desirable. As the fatty acid calcium, a Ca salt of a higher fatty acid (e.g., calcium stearate) is desirable. The fatty acid calcium dissolves in the raw material of a conductive material, such as pitch. As a result, the affinity between the raw material of a conductive material and the composite particles is enhanced, and the raw material of a conductive material is likely to be thinly coated on the surface of the composite particles.

Examples of the higher fatty acid include, without limitation: linear alkyl carboxylic acids, such as octylic acid, nonanoic acid, decanoic acid, undecanoic acid, dodecanoic acid (lauric acid), tridecanoic acid, tetradecanoic acid (myristic acid), pentadecanoic acid, hexadecanoic acid, heptadecanoic acid, and octadecane acid (stearic acid), nonadecanic acid, eicosanoic acid, heneicosanoic acid, and docosanoic acid; branched alkyl carboxylic acids, such as 2-ethylhexanoic acid, isododecanoic acid, isotridecanic acid, isotetradecanoic acid, isohexadecanoic acid, and isooctadecanic acid; and linear alkenyl carboxylic acids, such as octadecenoic acid, octadecadienoic acid, octadecatrienoic acid, and oleic acid. In particular, oleic acid, stearic acid, lauric acid, myristic acid, and the like are desirable.

The baking of the mixture of the raw material of a conductive material and the composite particles is performed, for example, in an inert atmosphere (e.g., an atmosphere of argon, nitrogen, etc.). The baking temperature is preferably 450 °C or higher and 1000 °C or lower. Within the above temperature range, the Ca-containing conductive layer which is highly electrically conductive can be easily formed on the silicate phase with low crystallinity. Through the baking, the raw material of a Ca component is converted into a Ca component, such as calcium carbonate and calcium oxide. The baking temperature is preferably 550 °C or higher and 900 °C or lower, more preferably 650 °C or higher and 850 °C or lower. The baking time is, for example, 1 hour or more and 10 hours or less.

Note that the Ca-containing conductive layer may be formed on the composite particles by another method. For example, the Ca-containing conductive layer may be formed by allowing a hydrocarbon gas and an organic substance containing Ca to react on the surface of the composite particles by a gas phase method, such as CVD method. As the hydrocarbon gas, acetylene, methane, and the like can be used. Alternatively, the Ca-containing conductive layer may be formed by mixing carbon black, together with an organic substance containing Ca, with the composite particles, to allow a precursor of the Ca-containing conductive layer to adhere onto the surface of the composite particles, followed by baking the precursor of the Ca-containing conductive layer together with the composite particles.

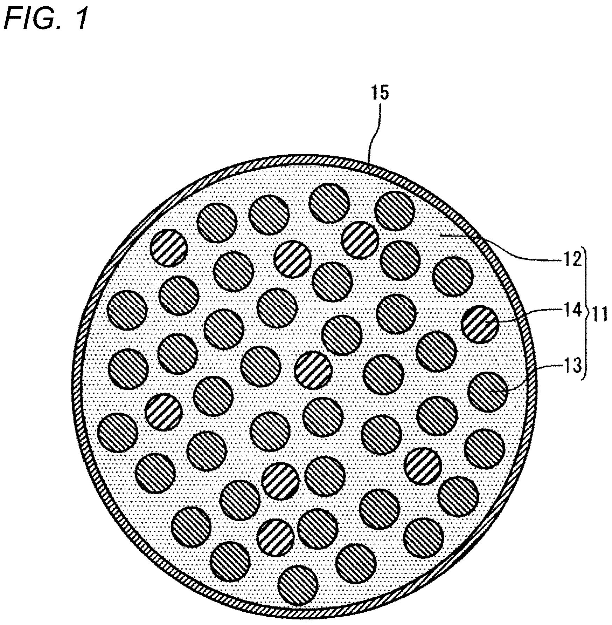

In the following, an example of a negative electrode material for a non-aqueous electrolyte secondary battery according to one embodiment of the present disclosure will be described with reference to FIG. 1. FIG. 1 is a schematic cross-sectional view of a composite particle 11 having a Ca-containing conductive layer 15. The composite particle 11 includes a silicate phase 12, silicon (elementary Si) phases 13 dispersed in the silicate phase 12, and as an optional component, a compound 14 of an element M. At least part of the surface of composite particle 11 is covered with the Ca-containing conductive layer 15.

The composite particle 11 has, for example, a sea-island structure, and in a cross section thereof, fine silicon phases 13 are substantially uniformly scattered, without being localized, in the matrix of the silicate phase 12. The silicate phases 12 may contain SiO₂ like a natural oxide film formed on the surface of the silicon phases.

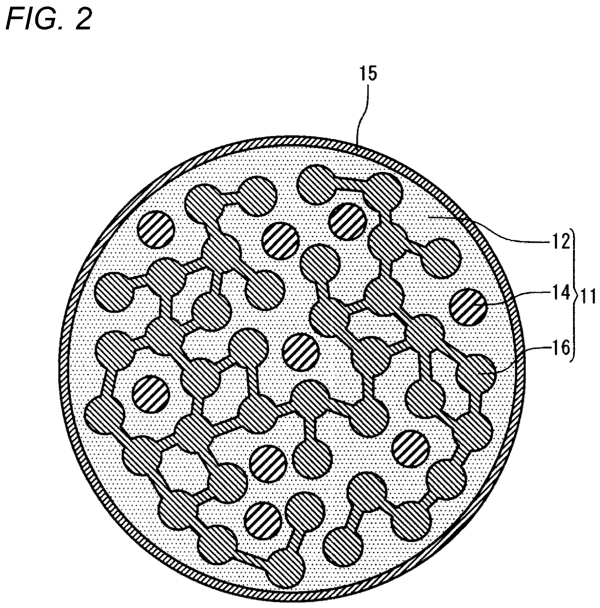

FIG. 2 is a schematic cross-sectional view of the composite particle 11 in a battery assembled using, as a negative electrode active material, the composite particles 11 having a Ca-containing conductive layer, after the battery is subjected to charge and discharge several times. Through charge and discharge, the adjacent particulate silicon phases 13 in FIG. 1 are joined with each other, to form a network-like silicon phase 16.

### [Non-aqueous electrolyte secondary battery]

A non-aqueous electrolyte secondary battery according to an embodiment of the present disclosure includes a positive electrode, a negative electrode, and a non-aqueous electrolyte. The negative electrode includes the above-described negative electrode material for a non-aqueous electrolyte secondary battery.

A detailed description of the non-aqueous electrolyte secondary battery will be given below.

### [Negative electrode]

The negative electrode may include a negative electrode current collector, and a negative electrode mixture layer supported on a surface of the negative electrode current collector. The negative electrode mixture layer can be formed by applying a negative electrode slurry including a negative electrode mixture dispersed in a dispersion medium, onto a surface of the negative electrode current collector, followed by drying. The applied film after drying may be rolled as needed. The negative electrode mixture layer may be formed on one surface or both surfaces of the negative electrode current collector.

The negative electrode mixture includes a negative electrode active material as an essential component, and can include a binder, a conductive agent, a thickener, and the like as optional components. For the negative electrode active material, the aforementioned negative electrode material (the composite particles having a conductive layer) is used.

The negative electrode active material preferably further includes a carbon material that electrochemically absorbs and releases lithium ions. The composite particles having conductive layer expand and contract in volume in association with charge and discharge. Therefore, increasing the ratio thereof in the negative electrode active material may cause a contact failure, in association with charge and discharge, between the negative electrode active material and the negative electrode current collector. However, by using the composite particles having a conductive layer in combination with a carbon material, excellent cycle characteristics can be achieved, while a high capacity of the silicon particles is imparted to the negative electrode. In view of achieving a higher capacity and improving the cycle characteristics, the ratio of the carbon material to the total of the composite particles having a conductive layer and the carbon material is preferably, for example, 98 mass% or less, more preferably 70 mass% or more and 98 mass% or less, still more preferably 75 mass% or more and 95 mass% or less.

Examples of the carbon material include graphite, graphitizable carbon (soft carbon), and non-graphitizable carbon (hard carbon). Preferred among them is graphite, which is stable during charge and discharge and whose irreversible capacity is small. The graphite means a material having a graphite-like crystal structure, examples of which include natural graphite, artificial graphite, and graphitized mesophase carbon particles. The carbon material may be used singly or in combination of two or more kinds.

Examples of the negative electrode current collector include a non-porous electrically conductive substrate (e.g., metal foil) and a porous electrically conductive substrate (e.g., mesh, net, punched sheet). The negative electrode current collector may be made of, for example, stainless steel, nickel, a nickel alloy, copper, or a copper alloy. The negative electrode current collector may have any thickness. In view of the balance between high strength and lightweight of the negative electrode, the thickness is preferably 1 to 50 µm, more preferably 5 to 20 µm.

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; acrylic resin, such as polyacrylic acid, polymethyl acrylate, and ethylene-acrylic acid copolymer; vinyl resin, such as polyacrylonitrile and polyvinyl acetate; polyvinyl pyrrolidone; polyether sulfone; and a rubbery material, such as styrene-butadiene copolymer rubber (SBR). The binder may be used singly or in combination of two or more kinds.

Examples of the conductive agent include: carbons, such as acetylene black; conductive fibers, such as carbon fibers and metal fibers; fluorinated carbon; metal powders, such as aluminum; conductive whiskers, such as zinc oxide and potassium titanate; conductive metal oxides, such as titanium oxide; and organic conductive materials, such as phenylene derivatives. The conductive agent may be used singly or in combination of two or more kinds.

Examples of the thickener include: cellulose derivatives (e.g., cellulose ether), such as carboxymethyl cellulose (CMC) and modified products thereof (including salts, such as Na salt), and methyl cellulose; saponificated products of a polymer having a vinyl acetate unit, such as polyvinyl alcohol; and polyether (e.g., polyalkylene oxide, such as polyethylene oxide). The thickener may be used singly or in combination of two or more kinds.

Examples of the dispersion medium include, without limitation: water; alcohols, such as ethanol; ethers, such as tetrahydrofuran; amides, such as dimethylformamide; N-methyl-2-pyrrolidone (NMP); and a mixed solvent of these.

### [Positive electrode]

The positive electrode may include a positive electrode current collector, and a positive electrode mixture layer supported on a surface of the positive electrode current collector. The positive electrode mixture layer can be formed by applying a positive electrode slurry including a positive electrode mixture dispersed in a dispersion medium, onto a surface of the positive electrode current collector, followed by drying. The applied film after drying may be rolled as needed. The positive electrode mixture layer may be formed on one surface or both surfaces of the positive electrode current collector. The positive electrode mixture includes a positive electrode active material as an essential component, and can include a binder, a conductive agent, and the like as optional components. The dispersion medium of the positive electrode slurry may be NMP or the like.

The positive electrode active material may be, for example, a lithium-containing composite oxide. Examples thereof include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value a representing the molar ratio of lithium is subjected to increase and decrease during charge and discharge.

Preferred is a lithium-nickel composite oxide represented by LiₐNi_{b}Me_{1-b}O₂, where Me is at least one selected from the group consisting of Mn, Co, and Al, 0 < a ≤ 1.2, and 0.3 ≤ b ≤ 1. In view of achieving a higher capacity, b preferably satisfies 0.85 ≤ b ≤ 1. In view of the stability of the crystal structure, more preferred is LiₐNi_{b}Co_{c}Al_{d}O₂ containing Co and Al as elements represented by Me, where 0 < a ≤ 1.2, 0.85 ≤ b < 1, 0 < c < 0.15, 0 < d ≤ 0.1, and b+c+d = 1.

The binder and the conductive agent may be like those exemplified for the negative electrode. The conductive agent may be graphite, such as natural graphite and artificial graphite.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

### [Non-aqueous electrolyte]

The non-aqueous electrolyte contains a non-aqueous solvent, and a lithium salt dissolved in the non-aqueous solvent. The concentration of the lithium salt in the non-aqueous electrolyte is preferably, for example, 0.5 mol/L or more and 2 mol/L or less. By controlling the lithium salt concentration within the above range, a non-aqueous electrolyte having excellent ion conductivity and moderate viscosity can be obtained. The lithium salt concentration, however, is not limited to the above.

As the non-aqueous solvent, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

Examples of the lithium salt include: LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imides. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Preferred among them is LiPF₆. The lithium salt may be used singly or in combination of two or more kinds

### [Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

**In** an exemplary structure of the non-aqueous electrolyte secondary battery, an electrode group formed by winding the positive electrode and the negative electrode with the separator interposed therebetween is housed together with the non-aqueous electrolyte in an outer body. The wound electrode group may be replaced with a different form of the electrode group, for example, a stacked electrode group formed by stacking the positive electrode and the negative electrode with the separator interposed therebetween. The non-aqueous electrolyte secondary battery may be in any form, such as cylindrical type, prismatic type, coin type, button type, or laminate type.

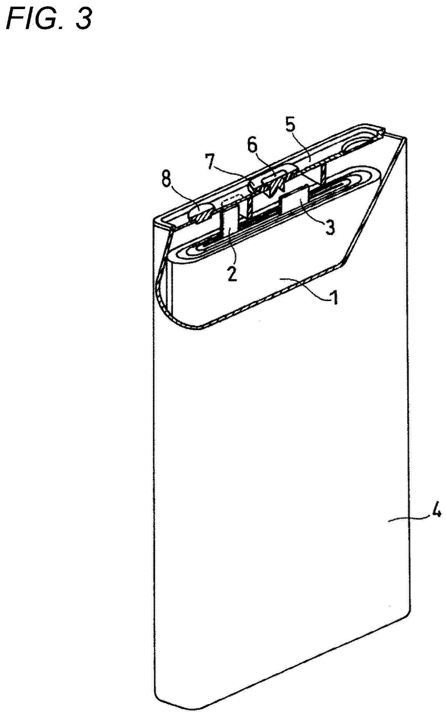

**In** the following, a structure of a prismatic non-aqueous electrolyte secondary battery which is an example of a non-aqueous electrolyte secondary battery according to the present disclosure will be described with reference to FIG. 3.

The battery includes a bottomed prismatic battery case 4, and an electrode group 1 and a non-aqueous electrolyte housed in the battery case 4. The electrode group 1 has a long negative electrode, a long positive electrode, and a separator interposed therebetween. The negative electrode current collector of the negative electrode is electrically connected, via a negative electrode lead 3, to a negative electrode terminal 6 provided on a sealing plate 5. The negative electrode terminal 6 is insulated from the sealing plate 5 by a resin gasket 7. The positive current collector of the positive electrode is electrically connected, via a positive lead 2, to the back side of a sealing plate 5. That is, the positive electrode is electrically connected to the battery case 4 which also serves as a positive electrode terminal. The sealing plate 5 is fitted at its periphery to the opening end of the battery case 4, and the fitted portion is laser-welded. The sealing plate 5 is provided with an injection port for non-aqueous electrolyte, and the port is closed with a sealing plug 8 after injection.

The present disclosure will be specifically described below with reference to Examples and Comparative Examples. It is to be noted, however, the present invention is not limited to the following Examples.

### <Example 1>

### [Preparation of composite particles]

### [First step]

Silicon dioxide and Li₂CO₃ were mixed, and in air, the mixture was baked at 950 °C for 10 hours, to obtain a silicate. The obtained silicate was pulverized to have an average particle diameter of 10 µm.

### [Second step]

The silicate and a raw material silicon (3N, average particle diameter: 10 µm) were mixed. In the mixture, the mass ratio of the silicate and the raw material silicon was set to 40:60.

The mixture was placed in a pot (made of SUS, volume: 500 mL) of a planetary ball mill (P-5, available from Fritsch Co., Ltd.), together with 24 SUS balls (diameter: 20 mm). In the pot with the lid closed, the mixture was pulverized at 200 rpm for 50 hours in an inert atmosphere.

### [Third step]

Next, the powdered mixture was taken out in an inert atmosphere, which was then baked at 600 °C for 4 hours, in an inert atmosphere, with a pressure applied by a hot press, to give a sintered body of the mixture.

### [Fourth step]

Next, the obtained sintered body was pulverized, and passed through a 40-µm mesh, to give composite particles.

### [Analysis of composite particles]

The crystallite size of the silicon phases in the composite particles determined by the already-described method was 15 nm.

The composition of the major component of the silicate phase in the composite particles determined by the already-described method was Li₂Si₂O₅.

### [Step of forming Ca-containing conductive layer]

Next, 100 parts by mass of the composite particles, 5 parts by mass of coal tar pitch, and 1 part by mass of calcium stearate were mixed, and then baked at 800 °C in an argon atmosphere, to form a Ca-containing conductive layer covering at least part of the surface of the composite particles. The coal tar pitch was converted by baking into amorphous carbon.

### [Analysis of Ca-containing conductive layer]

The thickness of the Ca-containing conductive layer determined by the already-described method was 10 nm.

The proportion by mass of the Ca-containing conductive layer to the total of the composite particles and the Ca-containing conductive layer was determined from the difference in mass of the composite particles between before and after forming the Ca-containing conductive layer, which was 3 mass%.

The result of analysis by TEM-EELS confirmed that the Ca component contained in the Ca-containing conductive layer was CaCO₃. Also, the ratio of the Ca contained in the Ca-containing conductive layer, relative to the mass of the composite particles, determined by the above-described method was 0.07 mass%.

### [Production of negative electrode]

The composite particles having a Ca-containing conductive layer and graphite were mixed in a mass ratio of 5:95, and used as a negative electrode active material. To a negative electrode mixture containing the negative electrode active material, a Na salt of CMC, and SBR in a mass ratio of 97.5:1:1.5, water was added, and stirred, to prepare a negative electrode slurry. Next, the negative electrode slurry was applied onto a surface of a copper foil so that the mass of the negative electrode mixture per 1 m² was 190 g, and the applied film was dried, and then, rolled, to produce a negative electrode with a negative electrode mixture layer having a density of 1.5 g/cm³ formed on both sides of the copper foil.

### [Production of positive electrode]

To a positive electrode mixture containing lithium cobaltate, acetylene black, and PVDF in a mass ratio of 95:2.5:2.5, NMP was added, and stirred, to prepare a positive electrode slurry. Next, the positive electrode slurry was applied onto a surface of an aluminum foil, and the applied film was dried, and then, rolled, to produce a positive electrode with a positive electrode mixture layer having a density of 3.6 g/cm³ formed on both sides of the aluminum foil.

### [Preparation of non-aqueous electrolyte]

LiPF₆ was dissolved at a concentration of 1.0 mol/L in a mixed solvent containing EC and DEC in a volume ratio of 3:7, to prepare a non-aqueous electrolyte (liquid electrolyte).

### [Fabrication of non-aqueous electrolyte secondary battery]

The positive electrode and the negative electrode, with a tab attached to each electrode, were wound spirally with a separator interposed therebetween such that the tab was positioned at the outermost layer, thereby to form an electrode group. The electrode group was inserted into an outer body made of aluminum laminated film and dried under vacuum at 105 °C for 2 hours. Thereafter, the non-aqueous electrolyte was injected, and the opening of the outer body was sealed. A battery A1 of Example 1 was thus fabricated.

### <<Example 2>>

A battery A2 of Example 2 was fabricated in the same manner as in Example 1, except that in the step of forming a Ca-containing conductive layer on the composite particles, the content of the calcium stearate relative to 100 parts by mass of the composite particles was changed to 5 parts by mass, and the ratio of the Ca contained in the Ca-containing conductive layer relative to the mass of the composite particles was set to 0.33 mass%.

### <<Comparative Example 1>>

A battery B1 of Comparative Example 1 was fabricated in the same manner as in Example 1, except that the calcium stearate was not used in the step of forming a Ca-containing conductive layer on the composite particles.

### <<Comparative Example 2>>

A battery B2 of Comparative Example 2 was fabricated in the same manner as in Example 1, except that in the step of forming a Ca-containing conductive layer on the composite particles, the calcium stearate was not used, and in the production of a negative electrode, CaO was contained in an amount of 0.5 mass% (0.36 mass% as Ca) relative to the composite particles, in the negative electrode mixture.

### <<Comparative Example 3>>

A battery B3 of Comparative Example 3 was fabricated in the same manner as in Example 1, except that in the step of forming a Ca-containing conductive layer on the composite particles, the calcium stearate was not used, and in the second step of preparing composite particles, CaO was contained in an amount of 3 mass% relative to the silicate, so that 0.92 mass% Ca was dispersed in the composite particles.

### <<Comparative Example 4>>

A battery B4 of Comparative Example 4 was fabricated in the same manner as in Example 1, except that in the step of forming a conductive layer on the composite particles, in place of the calcium stearate, 1 part by mass of magnesium stearate was used relative to 100 parts by mass of the composite particles, to form a Mg-containing conductive layer. The ratio of the Mg contained in the conductive layer relative to the mass of the composite particles is estimated to have been 0.05 mass%, based on the amount of the magnesium stearate used.

### <<Comparative Example 5>>

A battery B5 of Comparative Example 5 was fabricated in the same manner as in Example 1, except that in the step of forming a conductive layer on the composite particles, in place of the calcium stearate, 1 part by mass of aluminum stearate was used relative to 100 parts by mass of the composite particles, to form the Al-containing conductive layer. The ratio of the Al contained in the conductive layer relative to the mass of the composite particles is estimated to have been 0.06 mass%, based on the amount of the aluminum stearate used.

### [Cycle test]

### <Charging>

A constant-current charging was performed at a current of 1 It (800 mA) until the voltage reached 4.2 V, and then a constant-voltage charging was performed at a voltage of 4.2 V until the current reached 1/20 It (40 mA).

### <Discharging>

A constant-current discharging was performed at 1 It (800 mA) until the voltage reached 2.75 V.

The rest time between charging and discharging was 10 minutes.

The charging and discharging were performed in a 25 °C environment.

For each battery, a discharge capacity C1 at the 1st cycle was measured. In Table 1, the C1 value of each battery is shown as a relative value, with the value of the discharge capacity C1 in the battery B1 of Comparative Example 1 taken as 100.

Furthermore, for each battery, a discharge capacity C100 at the 100th cycle was measured, and a ratio represented by (C1-C100)/C1 was determined as a capacity deterioration rate R. In Table 1, the R value of each battery is shown as a relative value, with the value of the capacity deterioration rate R in the battery B1 of Comparative Example 1 taken as 100. The smaller the R value is, the smaller the reduction in charge-discharge cycle characteristics is, and the more excellent.

**[Table 1]**

| Battery | Added place | Component added | Ca (Mg, Al) (wt%) | C1 | R |
|---|---|---|---|---|---|
| A1 | in conductive layer | Ca | 0.07 | 100.3 | 82.5 |
| A2 | in conductive layer | Ca | 0.33 | 98.3 | 91.1 |
| B1 | - | - | 0 | 100.0 | 100.0 |
| B2 | in negative electrode mixture | Ca | 0.36 | 100.0 | 135.3 |
| B3 | in composite particles | Ca | 0.92 | 100.4 | 137.2 |
| B4 | in conductive layer | Mg | 0.05 (Mg) | 98.5 | 104.2 |
| B5 | in conductive layer | Al | 0.06 (Al) | 100.2 | 104.7 |

In the batteries A1 and A2 of Examples 1 and 2, a lower capacity deterioration rate was obtained, as compared to in the battery B1 of Comparative Example 1. This is presumably because the Ca-containing conductive layer covering at least part of the surface of the composite particles acted as a barrier layer to suppress the side reaction between the electrolyte decomposition product and the composite particles, which suppressed the deterioration of the silicate phase. On the other hand, in Comparative Example 2 in which CaO was contained in the negative electrode mixture, the capacity deterioration rate was rather increased. This is presumably because CaO exhibiting alkalinity accelerated the deterioration of the components, such as the binder. In Comparative Example 3 in which CaO was contained in the silicate phase, too, the capacity deterioration rate increased. This is presumably because CaO exhibiting alkalinity acted to draw the electrolyte decomposition product into the silicate phase, and the deterioration of the silicate phase was rather accelerated. Also, the batteries B4 and B5, in which a component other than Ca was added to the conductive layer showed a tendency that the capacity deterioration rate rather increased. This indicates that the action as a barrier layer to suppress the side reaction between the electrolyte decomposition product and the composite particles is unique to the Ca component.

### [Industrial Applicability]

A non-aqueous electrolyte secondary battery according to the present disclosure is useful as a main power source for mobile communication equipment, portable electronic equipment, and other similar devices.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug
- 11: composite particle
- 12: silicate phase
- 13 (16): silicon phase
- 14: compound of element M
- 15: Ca-containing conductive layer

## Claims

1. A negative electrode material for a non-aqueous electrolyte secondary battery, comprising:
composite particles (11); and a conductive layer (15) disposed on a surface of each of the composite particles (11), wherein
the composite particles (11) each have a silicate phase (12) containing Li₂Si₂O₅, and silicon phases (13) dispersed in the silicate phase (12),
the conductive layer (15) contains a calcium component,
the calcium component has an average particle diameter of 200 nm or less, when
the average particle diameter is determined as indicated in the description, and
the calcium component includes at least one selected from the group consisting of calcium carbonate and calcium oxide.

2. The negative electrode material for a non-aqueous electrolyte secondary battery according to claim 1, wherein the silicate phase (12) includes a lithium silicate.

3. The negative electrode material for a non-aqueous electrolyte secondary battery according to claim 1 or 2, wherein the lithium silicate contains Li₂Si₂O₅ as a major component.

4. The negative electrode material for a non-aqueous electrolyte secondary battery according to any one of claims 1 to 3, wherein the silicate phase (12) further contains at least one selected from the group consisting of sodium, potassium, magnesium, barium, zirconium, niobium, tantalum, vanadium, titanium, phosphorus, bismuth, zinc, tin, lead, antimony, cobalt, fluorine, tungsten, aluminum, boron, and a rare earth element.

5. The negative electrode material for a non-aqueous electrolyte secondary battery according to any one of claims 1 to 4, wherein the conductive layer (15) is formed of an amorphous carbon.

6. The negative electrode material for a non-aqueous electrolyte secondary battery according to any one of claims 1 to 5, wherein an amount of the calcium contained in the conductive layer (15), relative to a mass of the composite particles (11), is 0.01% or more and 0.5% or less.

7. The negative electrode material for a non-aqueous electrolyte secondary battery according to any one of claims 1 to 6, wherein a spectrum obtained when the conductive layer (15) is analyzed by electron energy loss spectroscopy has a peak derived from calcium carbonate.

8. The negative electrode material for a non-aqueous electrolyte secondary battery according to any one of claims 1 to 7, wherein a spectrum obtained when an interior of the composite particles (11) is analyzed by electron energy loss spectroscopy does not have a peak derived from calcium carbonate.

9. A non-aqueous electrolyte secondary battery, comprising:
a positive electrode; a negative electrode; and a non-aqueous electrolyte, wherein
the negative electrode includes the negative electrode material of any one of claims 1 to 8.

## Patentansprüche

1. Negativelektrodenmaterial für eine Sekundärbatterie mit nichtwässrigem Elektrolyt, umfassend:
Verbundpartikel (11); und eine leitfähige Schicht (15), die auf einer Oberfläche jedes der Verbundpartikel (11) angeordnet ist, wobei
die Verbundpartikel (11) jeweils eine Li₂Si₂O₅ enthaltende Silikatphase (12) und in der Silikatphase (12) dispergierte Siliziumphasen (13) aufweisen,
die leitfähige Schicht (15) eine Kalziumkomponente enthält,
die Kalziumkomponente einen durchschnittlichen Teilchendurchmesser von 200 nm oder weniger aufweist, wenn der durchschnittliche Teilchendurchmesser wie in der Beschreibung angegeben bestimmt wird, und
die Kalziumkomponente mindestens eines ausgewählt aus der Gruppe bestehend aus Kalziumkarbonat und Kalziumoxid einschließt.

2. Negativelektrodenmaterial für eine Sekundärbatterie mit nichtwässrigem Elektrolyt nach Anspruch 1, wobei die Silikatphase (12) ein Lithiumsilikat einschließt.

3. Negativelektrodenmaterial für eine Sekundärbatterie mit nichtwässrigem Elektrolyt nach Anspruch 1 oder 2, wobei das Lithiumsilikat Li₂Si₂O₅ als Hauptbestandteil enthält.

4. Negativelektrodenmaterial für eine Sekundärbatterie mit nichtwässrigem Elektrolyt nach einem der Ansprüche 1 bis 3, wobei die Silikatphase (12) außerdem mindestens eines ausgewählt aus der Gruppe bestehend aus Natrium, Kalium, Magnesium, Barium, Zirkonium, Niob, Tantal, Vanadium, Titan, Phosphor, Wismut, Zink, Zinn, Blei, Antimon, Kobalt, Fluor, Wolfram, Aluminium, Bor und einem Seltenerdelement enthält.

5. Negativelektrodenmaterial für eine Sekundärbatterie mit nichtwässrigem Elektrolyt nach einem der Ansprüche 1 bis 4, wobei die leitfähige Schicht (15) aus einem amorphen Kohlenstoff gebildet ist.

6. Negativelektrodenmaterial für eine Sekundärbatterie mit nichtwässrigem Elektrolyt nach einem der Ansprüche 1 bis 5, wobei die Menge des in der leitfähigen Schicht (15) enthaltenen Kalziums, bezogen auf die Masse der Verbundpartikel (11), 0,01 % oder mehr und 0,5 % oder weniger beträgt.

7. Negativelektrodenmaterial für eine Sekundärbatterie mit nichtwässrigem Elektrolyt nach einem der Ansprüche 1 bis 6, wobei ein Spektrum, das erhalten wird, wenn die leitfähige Schicht (15) durch Elektronenenergieverlustspektroskopie analysiert wird, einen von Kalziumkarbonat abgeleiteten Peak aufweist.

8. Negativelektrodenmaterial für eine Sekundärbatterie mit nichtwässrigem Elektrolyt nach einem der Ansprüche 1 bis 7, wobei ein Spektrum, das erhalten wird, wenn ein Inneres der Verbundpartikel (11) durch Elektronenenergieverlustspektroskopie analysiert wird, keinen von Kalziumkarbonat abgeleiteten Peak aufweist.

9. Sekundärbatterie mit nichtwässrigem Elektrolyt, umfassend:
eine positive Elektrode; eine negative Elektrode; und einen wasserfreien Elektrolyten, wobei
die negative Elektrode das Negativelektrodenmaterial nach einem der Ansprüche 1 bis 8 einschließt.

## Revendications

1. Matériau d'électrode négative pour une batterie rechargeable à électrolyte non aqueux, comprenant :
des particules composites (11) ; et une couche conductrice (15) disposée sur une surface de chacune des particules composites (11),
dans lequel
les particules composites (11) ont chacune une phase de silicate (12) contenant Li₂Si₂O₅, et des phases de silicium (13) dispersées dans la phase de silicate (12),
la couche conductrice (15) contient un composant à base de calcium,
le composant à base de calcium a un diamètre de particule moyen de 200 nm ou moins, quand le diamètre de particule moyen est déterminé comme indiqué dans la description, et
le composant à base de calcium inclut au moins l'un choisi dans le groupe constitué par le carbonate de calcium et l'oxyde de calcium.

2. Matériau d'électrode négative pour une batterie rechargeable à électrolyte non aqueux selon la revendication 1, dans lequel la phase de silicate (12) inclut un silicate de lithium.

3. Matériau d'électrode négative pour une batterie rechargeable à électrolyte non aqueux selon la revendication 1 ou 2, dans lequel le silicate de lithium contient Li₂Si₂O₅ en tant que composant majoritaire.

4. Matériau d'électrode négative pour une batterie rechargeable à électrolyte non aqueux selon l'une quelconque des revendications 1 à 3, dans lequel la phase de silicate (12) contient en outre au moins l'un choisi dans le groupe constitué par le sodium, le potassium, le magnésium, le baryum, le zirconium, le niobium, le tantale, le vanadium, le titane, le phosphore, le bismuth, le zinc, l'étain, le plomb, l'antimoine, le cobalt, le fluor, le tungstène, l'aluminium, le bore, et un élément des terres rares.

5. Matériau d'électrode négative pour une batterie rechargeable à électrolyte non aqueux selon l'une quelconque des revendications 1 à 4, dans lequel la couche conductrice (15) est formée d'un carbone amorphe.

6. Matériau d'électrode négative pour une batterie rechargeable à électrolyte non aqueux selon l'une quelconque des revendications 1 à 5, dans lequel la quantité du calcium contenu dans la couche conductrice (15), par rapport à la masse des particules composites (11), est de 0,01 % ou plus et 0,5 % ou moins.

7. Matériau d'électrode négative pour une batterie rechargeable à électrolyte non aqueux selon l'une quelconque des revendications 1 à 6, dans lequel un spectre obtenu quand la couche conductrice (15) est analysée par spectroscopie de perte d'énergie des électrons a un pic dérivé du carbonate de calcium.

8. Matériau d'électrode négative pour une batterie rechargeable à électrolyte non aqueux selon l'une quelconque des revendications 1 à 7, dans lequel un spectre obtenu quand l'intérieur des particules composites (11) est analysé par spectroscopie de perte d'énergie des électrons n'a pas de pic dérivé du carbonate de calcium.

9. Batterie rechargeable à électrolyte non aqueux, comprenant :
une électrode positive ; une électrode négative ; et un électrolyte non aqueux,
dans laquelle l'électrode négative inclut le matériau d'électrode négative de l'une quelconque des revendications 1 à 8.
